(19) Europäisches Patentamt
European Patent Office
Office européen des brevets

(11) **EP 2 130 783 A1**

(12) **EUROPEAN PATENT APPLICATION**
published in accordance with Art. 153(4) EPC

(43) Date of publication:
**09.12.2009 Bulletin 2009/50**

(21) Application number: **08739703.0**

(22) Date of filing: **02.04.2008**

(51) Int Cl.:
*B65D 65/40* (2006.01)   *B29C 49/08* (2006.01)
*B29C 49/22* (2006.01)   *B32B 27/34* (2006.01)
*B32B 27/36* (2006.01)   *B65D 1/00* (2006.01)
*C08L 77/00* (2006.01)   *B29K 67/00* (2006.01)
*B29K 77/00* (2006.01)   *B29L 9/00* (2006.01)
*B29L 22/00* (2006.01)

(86) International application number:
**PCT/JP2008/056592**

(87) International publication number:
**WO 2008/126745 (23.10.2008 Gazette 2008/43)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.04.2007 JP 2007099113**

(71) Applicant: **Toyo Seikan Kaisha, Ltd.**
**Tokyo 100-8522 (JP)**

(72) Inventors:
• **SASAI, Misa**
**Yokohama-shi**
**Kanagawa 240-0062 (JP)**

• **KIKUCHI, Atsushi**
**Yokohama-shi**
**Kanagawa 240-0062 (JP)**
• **FUNAOKA, Shinichirou**
**Yokohama-shi**
**Kanagawa 240-0062 (JP)**

(74) Representative: **Manley, Nicholas Michael**
**W.P. Thompson & Co.**
**Coopers Building**
**Church Street**
**Liverpool L1 3AB (GB)**

(54) **MULTILAYERED POLYESTER CONTAINER AND PROCESS FOR PRODUCING THE SAME**

(57)   A multilayer polyester container comprising inner and outer layers of a polyester resin and at least one intermediate layer of a polyamide resin, wherein in the container body portion, the intermediate layer of the polyamide resin has an exothermic peak starting temperature due to crystallization of not lower than 96°C as measured by a differential scanning calorimetry, and a clay is dispersed in the polyamide resin, effectively preventing whitening of the intermediate layer even after the passage of time and featuring excellent transparency despite of using, as an intermediate layer, a polyamide resin composition obtained by blending the polyamide resin with the clay.

Fig. 1

1   3   2

**Description**

Technical Field:

This invention relates to a multilayer polyester container having an intermediate layer of a polyamide resin composition obtained by dispersing a clay in a polyamide resin. More specifically, the invention relates to a multilayer polyester container capable of maintaining excellent transparency for extended periods of time and to a process for producing the same.

Background Art:

In order to improve preservability of contents in a plastic packing container, a multilayer structure has heretofore been employed for the container walls, the inner and outer layers thereof being formed by using a polyester resin, and the intermediate layer thereof being formed by using an ethylene/vinyl alcohol copolymer or a xylylene group-containing polyamide resin for improving gas-barrier property or being formed by using a functional resin such as a cyclic olefin copolymer for improving vapor (water) -barrier property (patent document 1).

Attempts have, further, been made to blend the functional resin with an inorganic filler or other resin composition in order to further improve the function such as gas-barrier property or to impart other functions. For example, the following patent document 2 teaches blending a xylylene group-containing polyamide with an organic clay in order to further improve gas-barrier property of a xylylene group-containing polyamide resin.

Patent document 1: JP-A-2005-067637
Patent document 2: JP-A-2004-142444

Disclosure of the Invention:

Problems that the Invention is to Solve:

If a polyester container of a multilayer structure having an intermediate layer of the above-mentioned functional resin is biaxially stretch-blow-molded under the same conditions as those for the polyester container of the single layer, however, the container undergoes whitening after preserved for extended periods of time, and transparency is impaired. In particular, a multilayer polyester container including an intermediate layer of a functional resin composition obtained by dispersing a clay in the polyamide resin, has such a stretching property as to produce a large load at the time of being stretched and, therefore, tends to be whitened from the beginning of molding forming voids in the intermediate layer.

It is, therefore, an object of the present invention to provide a multilayer polyester container effectively preventing whitening even after the passage of time and featuring excellent transparency despite of using, as an intermediate layer, a polyamide resin composition obtained by blending a polyamide resin with a clay, and a process for producing the same.

Means for Solving the Problems:

According to the present invention, there is provided a multilayer polyester container comprising inner and outer layers of a polyester resin and at least one intermediate layer of a polyamide resin, wherein in the container body portion, the intermediate layer of the polyamide resin has an exothermic peak starting temperature due to crystallization of not lower than 96°C as measured by a differential scanning calorimetry, and a clay is dispersed in the polyamide resin. In the multilayer polyester container of the present invention, it is desired that:

1. The intermediate layer of the polyamide resin has an exothermic peak due to crystallization of not higher than 9 J/g;
2. The polyamide resin is a polymetaxyleneadipamide;
3. The intermediate layer of the polyamide resin has a thickness of less than 20 $\mu$m; and
4. The inner layer of the polyester resin has a crystallinity of not less than 23%, the outer layer thereof has a crystallinity of not less than 18%, and an average value of the crystallinity of the inner layer and the crystallinity of the outer layer is not less than 24%.

According to the present invention, further, there is provided a process for producing a multilayer polyester container by biaxially stretch-blow-molding a multilayer preform which comprises inner and outer layers of a polyester resin and at least one intermediate layer of a polyamide resin in which a clay is dispersed, wherein the multilayer preform is biaxially stretch-blow-molded being heated at a temperature of 110 to 120°C so as to mold a multilayer polyester container in which the intermediate layer of the polyamide resin has an exothermic peak starting temperature due to crystallization of not lower than 96°C as measured by a differential scanning calorimetry.

Effects of the Invention:

According to the multi-layer polyester container of the present invention, the clay-containing polyamide resin composition used as the intermediate layer expresses excellent gas-barrier property effectively preventing the whitening even after the passage of time and maintaining excellent transparency over extended periods of time.
Further, according to the process for producing the multilayer polyester container of the invention, there is required no heat-fixing step that is required by the process for producing heat-resistant polyester containers, the exothermic peak starting temperature of the intermediate layer of the clay-containing polyamide resin composition in the container body portion can be set to be not lower than 96°C as measured by the DSC, and it is made possible to produce the multilayer polyester containers efficiently preventing the whitening caused by aging.

Brief Description of the Drawings:

[Fig. 1] is a view illustrating a sectional structure of a multilayer polyester container of the present invention.
[Fig. 2] is a view illustrating a sectional structure of a multilayer polyester container of the present invention.

Best Mode for Carrying Out the Invention:

According to the present invention, an important feature resides in that the a multilayer polyester container has a multilayer structure comprising inner and outer layers of a polyester resin and at least one intermediate layer of a clay-containing polyamide resin composition, wherein in the container body portion, the intermediate layer of the clay-containing polyamide resin composition has an exothermic peak starting temperature due to crystallization of not lower than 96°C as measured by a differential scanning calorimetry (DSC).
As described above, the clay-containing polyamide resin composition obtained by blending a polyamide resin with a clay has such properties as producing a large load at the time of being stretched. Therefore, if the multilayer polyester container is molded by the same method as that of producing ordinary multilayer polyester containers, the container tends to be whitened from the beginning of molding, and the whitening further proceeds as the container is preserved for extended periods of time impairing the transparency.
Since it was considered that the above problem stemmed from the crystallization of the intermediate layer in the multilayer polyester container, the present inventors have attempted to set the exothermic peak starting temperature due to crystallization of the intermediate layer of the clay-containing polyamide resin composition to be not lower than 96°C in the container body portion as measured by the differential scanning calorimetry. As a result, the inventors have discovered that the above problems did not occur even in the above multilayer polyester containers.
That is, according to the multilayer polyester container of the present invention, the intermediate layer of the clay-containing polyamide resin composition has an exothermic peak starting temperature due to crystallization of not lower than the above-mentioned value as measured by the differential scanning calorimetry from which it is learned that the crystallization has been promoted in the intermediate layer of the multilayer polyester container and, therefore, little amorphous portion is left that can be crystallized under the subsequent environmental conditions, i.e., the intermediate layer has a structure that can be crystallized little. Therefore, the intermediate layer in the multilayer polyester container of the invention is suppressed from being crystallized even after preserved for extended periods of time and, therefore, the initial transparency at the time of being molded can be maintained for extended periods of time.
The actions and effects of the invention will become obvious from the results of Examples described later.
That is, in the multilayer polyester containers of the invention of which the intermediate layer of the clay-containing polyamide resin composition has an exothermic peak starting temperature of not lower than the above-mentioned value as measured by the DSC, haze of the container decreases or is suppressed from increasing, and transparency is maintained in the aging test conducted at 50°C, 80%RH, 72 hours (Examples 1 to 5) while in the multilayer polyester containers of which the exothermic peak starting temperature is lower than the above value as measured by the DSC, haze increases and transparency is impaired (Comparative Examples 1 to 3 and 5).
In the multilayer polyester container of the invention, further, it is desired that the exothermic peak due to crystallization of the intermediate layer of the clay-containing polyamide resin composition is not higher than 9 J/g. That is, the exothermic peak due to crystallization which is not higher than 9 J/g represents the amount of the amorphous component that can be crystallized upon passing through a crystallizing temperature, i.e., represents the amount of the amorphous component that can be crystallized. Namely, the value which is not higher than 9 J/g means that a considerable proportion of those that can be crystallized has already been crystallized in the amorphous component of the polyamide resin or is assuming a structure that can be little crystallized like the case of when the crystallization starting temperature is not lower than 96°C.

In the multilayer polyester container of the invention, further, it is particularly desired that the inner layer of the polyester resin has a crystallinity of not less than 23%, the outer layer thereof has a crystallinity of not less than 18%, and an average value of the crystallinity of the inner layer and the crystallinity of the outer layer is not less than 24% in the container body portion. That is, the inner layer and the outer layer of the polyester resin having crystallinities of not smaller than the above values permit little water to permeate into the intermediate layer. Therefore, the molecular motion in the intermediate layer is suppressed effectively suppressing the whitening of the intermediate layer that stems from the crystallization after preserved for extended periods of time, and more excellent transparency can be maintained. According to the present invention, the crystallinity Xc of the polyester resin forming the inner and outer layers is measured by a density method, i.e., calculated in compliance with the following formula,

$$Xc = [dc(d - da)/d(dc - da)] \times 100$$

wherein da is a density of a completely amorphous polyester resin, dc is a density of a theoretically completely crystallized polyester resin, and d is a density of a sample.

When the multilayer polyester container of the invention having the above-mentioned features is obtained by the process for producing a multilayer polyester container by biaxially stretch-blow-molding the multilayer preform that comprises inner and outer layers of the polyester resin and at least one intermediate layer of the clay-containing polyamide resin composition and by heating the multilayer preform at a temperature of 110 to 120°C, stress is relaxed in the clay-containing polyamide resin composition at the time of being stretched, and the crystallization is promoted due to the clay that is added.

That is, when the multilayer polyester container of the invention is obtained by biaxially stretch-blow-molding the preform while heating it in the above temperature range, the inner layer of the clay-containing polyamide resin composition exhibits an exothermic peak starting temperature due to crystallization of not lower than the above value as measured by the differential scanning calorimetry (Examples 1 to 5). When the multilayer polyester container is obtained by biaxially stretch-blow-molding the preform according to a conventional method of producing the multilayer polyester container while heating it at a temperature of lower than 110°C, the intermediate layer exhibits an exothermic peak starting temperature due to crystallization of lower than the above value as measured by the differential scanning calorimetry. As a result, transparency is impaired after preserved for extended periods of time (Comparative Examples 1, 2, 3 and 5).

(Intermediate layer)

The intermediate layer of the polyester container of the invention uses a clay-containing polyamide resin composition obtained by dispersing a clay in a polyamide resin.

That is, the polyamide resin exhibits excellent gas-barrier property but also produces a large stress upon elongation, and tends to lose functions such as transparency and gas-barrier property upon elongation. Besides, if a clay is dispersed in the polyamide resin, more stress is produced upon elongation than by the polyamide resin alone impairing the functions such as transparency and gas-barrier property due to the formation of voids. Therefore, it is desired to attain improvements particularly as contemplated by the present invention.

As the polyamide resin used in the invention, there can be preferably used a polyamide obtained by the polycondensation of a diamine component comprising a metaxylylenediamine as a chief component with a dicarboxylic acid component comprising an $\alpha,\omega$-direct chain aliphatic dicarboxylic acid having 4 to 20 carbon atoms as a chief component. As the $\alpha,\omega$-direct chain aliphatic dicarboxylic acid having 4 to 20 carbon atoms, there can be exemplified aliphatic dicarboxylic acid such as succinic acid, glutaric acid, pimelic acid, suberic acid, azelaic acid, adipic acid, sebacic acid, undecanoic diacid and dodecanoic diacid.

In the invention, excellent actions and effects can be distinctly expressed particularly when there is used a polymetaxylyleneadipamide or polymetaxylenesebacamide that produces large stress upon elongation and has excellent gas-barrier property.

As the clay, there can be used mica, vermiculite and smectite and, preferably, lamellar silicate of the 2-octaheral type or the 3-octahedral type having a charge density of 0.25 to 0.6. As the ones of the 2-octahedral type, there can be exemplified montmorillonite, beidellite and nontronite. As the ones of the 3-octahedral type, there can be exemplified hectorite and suponite.

The clay used in the invention is, particularly desirably, the clay that is treated to be swollen with an organic property-imparting agent from the standpoint of gas-barrier property. Among the above clays, in this case, the montmorillonite has highly swelling property, and the swelling spreads among the layers due to the infiltration of the organic property-imparting agent.

As the organic property-imparting agent, a quaternary ammonium salt can be preferably used. More preferably, there can be used a quaternary ammonium salt having at least one or more alkyl groups with not less than 12 carbon atoms, such as trimethyldodecyl ammonium salt and trimethyltetradecyl ammonium salt.

It is desired that the clay-containing polyamide resin composition contains the clay at a ratio of 1 to 10 parts by weight and, particularly, 1 to 8 parts by weight per 100 parts by weight of the polyamide resin. If the amount of clay is smaller than the above range, the gas-barrier property cannot be sufficiently obtained by the addition of the clay as compared to when the clay is added in an amount in the above range. If the amount of clay is larger than the above range, on the other hand, the moldability becomes poorer than when the clay is added in an amount in the above range.

Further, the clay-containing polyamide resin composition may be blended with an oxidizing organic component and a transition metal catalyst in combination to impart oxygen-absorbing property thereto.

As the oxidizing organic component, there can be exemplified those having a functional group on a side chain or at a terminal and that can be oxidized. Concretely, there can be exemplified a polyene oligomer or a polymer modified with an acid or an acid anhydride, such as butadiene and butadiene modified with anhydrous maleic acid. As the transition metal catalyst, there can be used metal components of the Group VIII of periodic table, such as iron, cobalt and nickel to which only, however, the invention is in no way limited.

It is desired that the oxidizing organic component is blended in an amount of 2 to 10 parts by weight per 100 parts by weight of the functional resin and that the transition metal catalyst is blended in an amount of at least 300 ppm calculated as metal.

The polyamide resin used in the invention can be blended with the clay, as well as an oxidizing component and a transition metal catalyst in combination, and known resin blending agents such as disoxidant, filler, coloring agent, heat stabilizer, aging stabilizer, antioxidant, anti-aging agent, photo stabilizer, ultraviolet ray absorber, antistatic agent, lubricant such as metal soap or wax, and reforming resin or rubber in a range in which they do not impair the object of the invention according to known recipe.

(Inner and outer layers)

As the polyester resin used for the inner and outer layers of the invention, there can be used a known polyester resin comprising a dicarboxylic acid component and a diol component.

As the dicarboxylic acid component, it is desired that not less than 50% and, particularly, not less than 80% of the dicarboxylic acid component is a terephthalic acid from the standpoint of mechanical properties and thermal properties. However, carboxylic acid components other than the terephthalic acid may be contained, as a matter of course. As the carboxylic acid components other than the terephthalic acid, there can be exemplified isophthalic acid, naphthalenedicarboxylic acid, p-β-oxyethoxybenzoic acid, biphenyl-4,4'-dicarboxylic acid, diphenoxyethane-4,4'-dicarboxylic acid, 5-sodiumsulfoisophthalic acid, hexahydroterephthalic acid, adipic acid and sebacic acid.

As the diol component, it is desired that not less than 50% and, particularly, not less than 80% of the diol component is an ethylene glycol from the standpoint of mechanical properties and thermal properties. As the diol component other than the ethylene glycol, there can be exemplified 1,4-butanediol, propylene glycol, neopentyl glycol, 1,6-hexylene glycol, diethylene glycol, triethylene glycol, cyclohexanedimethanol, ethylene oxide adduct of bisphenol A, glycerol and trimethylolpropane.

Further, the above dicarboxylic acid component and the diol component may contain trifunctional or more highly functional polybasic acid and polyhydric alcohol; i.e., polybasic acids such as trimellitic acid, pyromellitic acid, hemimellitic acid, 1,1,2,2-ethanetetracarboylic acid, 1,1,2-ethanetricarboxylic acid, 1,3,5-pentanetricarboxylic acid, 1,2,3,4-cyclopentanetetracarboxylic acid and biphenyl-3,4,3',4'-tetracarboxylic acid, and polyhydric alcohols such as pentaerythritol, glycerol, trimethylolpropane, 1,2,6-hexanetriol, sorbitol and 1,1,4,4-tetrakis(hydroxymethyl)cyclohexane.

It is desired that the polyester resin used for the inner and outer layers of the invention has an intrinsic viscosity in a range of 0.60 to 1.40 dL/g as measured at 30°C by using a phenol/tetrachloroethane mixed solvent at a weight ratio of 1:1. It is, further, desired that the polyester resin has a melting point (Tm) of 200 to 275°C to improve the heat resistance and workability of the multilayer container. It is, further, desired that the polyester resin has a glass transition point of not lower than 30°C and, particularly, in a range of 50 to 120°C.

The polyester resin used for the inner and outer layers of the invention can be blended with known blending agents for resins, such as coloring agent, antioxidizing agent, stabilizer, various antistatic agents, parting agent, lubricant and nucleating agent in a range in which they do not impair the quality of the finally molded article according to a known recipe.

(Multilayer structure)

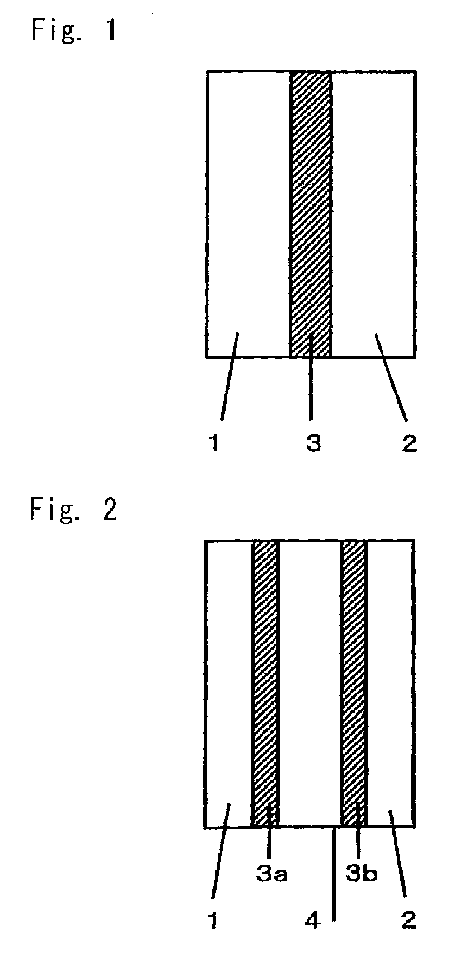

The multilayer polyester container of the invention can employ various layer constitutions so far as it includes inner and outer layers of a polyester resin and at least one intermediate layer of a functional resin composition blended with a clay. The layer constitution may have the intermediate layer 3 of the clay-containing polyamide resin composition between the inner layer 1 and the outer layer 2 of the polyester resin as shown in Fig. 1. Or, as shown in Fig. 2, the layer constitution may include the inner layer 1 and the outer layer 2 of the polyester resin, and two intermediate layers 3a, 3b of the clay-containing polyamide resin composition interposed between the inner layer 1 of the polyester resin and an intermediate layer 4 of the polyester resin, and between the outer layer 2 of the polyester resin and the intermediate layer 4 of the polyester resin.

In producing a multilayer container, though usually not necessary, an adhesive resin can be interposed among the resin layers. As the adhesive resin, there can be exemplified a thermoplastic resin that contains carbonyl (-CO-) groups based on carboxylic acid, carboxylic acid anhydride, carboxylate, carboxylic acid amide or carboxylic acid ester on a main chain or on a side chain at a concentration of 1 to 700 milliequivalents (meq)/100 g of the resin and, particularly, 10 to 500 meq/100 g of the resin. Preferred examples of the adhesive resin include ethylene/acrylic acid copolymer, ionically crosslinked olefin copolymer, maleic anhydride-grafted polyethylene, maleic anhydride-grafted polypropylene, acrylic acid-grafted polyolefin, ethylene/vinyl acetate copolymer and copolymerized polyester.

In the multilayer polyester container of the present invention, it is desired that the body portion has an overall thickness in a range of 200 to 600 $\mu$m and, particularly, 240 to 500 $\mu$m though it may vary depending upon the volume (weight) of the container and the use of the container.

It is important that the thickness of the layer comprising the clay-containing polyamide resin composition which is the intermediate layer is less than 20 $\mu$m from the standpoint of transparency of the container and, particularly, in a range of 5 to 15 $\mu$m, and that the thickness of the intermediate layer is in a range of 3 to 10% of the overall thickness of the body portion.

If there are made present a plurality of intermediate layers comprising the clay-containing polyamide resin composition, it is desired that each intermediate layer has a thickness of less than 20 $\mu$m and, particularly, in a range of 5 to 15 $\mu$m, and the intermediate layers as a whole have a thickness in a range of 3 to 20% of the overall thickness of the body portion.

(Process for production)

The multilayer polyester container of the present invention can be produced by molding a preform having the above-mentioned multilayer structure, heating the preform at a high temperature of 110 to 120°C and, particularly, 112 to 118°C, stretch-drawing the preform in the axial direction and, at the same time, blow-stretching the preform in the circumferential direction.

The multilayer preform can be produced by a known molding method, such as a coextrusion-molding method which coextrudes the clay-containing polyamide resin composition and the polyester resin together; a simultaneous injection-molding method which simultaneously injects the clay-containing polyamide resin composition and the polyester resin into a metal mold; a sequential injection method which sequentially injects the polyester resin, the clay-containing polyamide resin composition and the polyester resin into the metal mold; and a compression-molding method which compression-molds a coextruded product of the clay-containing polyamide resin composition and the polyester resin by using a core metal mold and a cavity metal mold.

When any one of these systems is employed, the preform that is molded should be in a supercooled state, i.e., in an amorphous state, and it is desired that the intermediate layer comprising the clay-containing polyamide resin composition is sealed in the inner and outer layers of the thermoplastic polyester.

It is desired that molding the multilayer preform and stretch-blow-molding the multilayer preform are conducted by a cold parison system as described above. It is, however, also allowable to conduct the stretch-blow molding by a hot parison system without completely cooling the multilayer preform that is molded.

Prior to conducting the stretch-blow molding, the preform is preheated up to a stretching temperature by such means as hot air, infrared-ray heater or high-frequency induction heating. Here, according to the present invention, it is particularly important to stretch-blow the preform by heating it at a temperature higher than that of the ordinary stretch-blow molding, i.e., at 110 to 120°C and, particularly, at 112 to 118°C. If the temperature of the preform is lower than the above temperature, the intermediate layer comprising the clay-containing polyamide resin composition produces large stress upon elongation and, therefore, promotion of crystallization due to stretch orientation cannot be expected, transparency decreases after preserved for extended periods of time, voids easily occur, and the transparency of the obtained polyester container is deteriorated. On the other hand, if the temperature of the preform is higher than the above range, the preform is softened, and the center of the preform is deviated at the time of stretch-blow molding deteriorating the moldability. Therefore, the thickness of the obtained polyester container becomes nonuniform, and the preform is crystallized before being stretch-blow-molded and can no longer be molded.

The heated preform is fed into a known stretch-blow-molding machine, set into a metal mold, drawn and stretched in the axial direction by pushing in a stretching rod, and is stretched in the circumferential direction by blowing a fluid. Here, in the invention, it is desired to heat the interior of the multilayer preform by using a heating body heated at 300 to 600°C and/or by using the hot air of 150 to 220°C and, particularly, 170 to 210°C.

That is, in biaxially stretch-blow-molding the preform heated at a temperature in the above range, the interior of the preform has been heated by inserting the heating body heated at a high temperature and/or by blowing the hot air of a high temperature, whereby the temperature in the interior of the preform becomes more high and the temperature in the preform is maintained high at the time of being stretch-blow-molded, promoting the relaxation of strain thereof and relaxing the strain of the intermediate layer comprising the clay-containing polyamide resin composition that produces a large stress upon elongation, suppressing the formation of voids and without impairing functions such as transparency and gas-barrier property.

In the present invention, it is desired that the temperatures of the heating body and of the hot air are in the above ranges. If the temperatures are lower than the above ranges, the interior of the preform is not heated to a sufficient degree and relaxation of strain cannot be efficiently promoted. If the temperatures are higher than the above ranges, on the other hand, the inner polyester layer and the clay-containing polyamide resin composition layer are whitened due to crystallization and are stretched nonuniformly, or the clay-containing polyamide resin composition layer is nonuniformly stretched and is poorly molded.

It is desired that the time for internal heating varies depending upon the temperature for preheating the preform and the setpoint temperature of the heating body used for the internal heating and is, preferably, in a range of 8 to 20 seconds and, particularly, 10 to 15 seconds. It is, further, desired that the hot air used for the stretch-blow molding is blown into the preform set in the metal mold for 2 to 3 seconds.

The stretching ratios of the multilayer polyester container which is the final product are, preferably, in ranges of 1.5 to 25 times as the area ratio, 1.2 to 6 times as the stretching ratio in the axial direction, and 1.2 to 4.5 times as the stretching ratio in the circumferential direction.

When used in the applications where heat resistance is required, the stretch-blow-molded bottles can be heat-set by known means. The heat-setting can be effected in a blow-molding metal mold based on a one-molding method, or can also be effected in a metal mold for heat-setting separate from the blow-molding metal mold based a two-molding method. The temperature for heat-setting is, desirably, in a range of 100 to 200°C.

As the other stretch-blow molding, there can be exemplified in examined patent document: JP-B-2917851 concerned with the present applicant, a two-step stretch-blow molding in which a preform is molded into a primary blow-molded body of a size larger than the final blow-molded body by using a primary blow metal mold and, next, the primary blow-molded body is heat-contracted and is, thereafter, molded into the final blow-molded body through the biaxial stretch-blow molding by using a secondary blow metal mold. The stretch-blow molding makes it possible to decrease the thickness of the bottom portion to a sufficient degree by stretching and to obtain a blow-molded body having the bottom portion which features excellent resistance against deformation and shocks at the time of hot-fitting and sterilization by heating.

According to the present invention, it is important to heat the preform at a temperature as high as 110 to 120°C during the primary blow molding even when the two-step stretch-blow molding is employed.

The multilayer polyester container of the present invention has gas-barrier property, and is useful as a container that prevents a decrease of flavor of the content caused by, for example, oxygen. As the content that can be filled, there can be exemplified beverages such as beer, wine, fruit juices, carbonated soft drinks, juice-containing carbonated beverages, etc.; foods such as fruits, nuts, vegetables, meat products, infant's foods, coffee, jam, mayonnaise, ketchup, edible oils, dressings, sauce, foods boiled in soy, milk products, etc.; as well as medicines, cosmetics, gasoline, etc. that undergo deterioration in the presence of oxygen, to which only, however, the use is in no way limited.

EXAMPLES

The invention will be further described by way of the following Examples which, however, are not to limit the invention.

[Measuring the exothermic peak starting temperature and exothermic peak]

Intermediate layer comprising the clay-containing polyamide resin composition was peeled off from the center of the body portion of the obtained multilayer container and from the shoulder portion thereof. About 8 mg of thereof was accurately weighed and was sealed in an aluminum pan specified by the apparatus. By using a differential scanning calorimeter [DSC7 differential scanning calorimeter: manufactured by PERKIN ELMER Co.], the aluminum pan was heated from 20°C up to 280°C at a rate of 10°C a minute to obtain a chart exhibiting exothermic peaks due to crystallization. From the chart, an exothermic peak starting temperature was read. Further, an exothermal peak (J/g) was found from the peak area.

[Measuring the crystallinity]

A test piece of a width of 5 mm and a length of 5 mm was cut out from the center of the body portion of the obtained multilayer bottle. The inner polyester layer and the outer polyester layer were peeled off from the test piece. The sample was dipped in a water/calcium nitrate type density-gradient tube at 20°C for 2 hours and, thereafter, the position of the sample was read to find the density d(g/cm$^3$) of the test piece. The crystallinity $\chi_c$(%) was found from the obtained density in compliance with the following formula,

$$\chi_c = [1.455 \times (d - 1.335)/(d \times (1.455 - 1.335))] \times 100$$

wherein 1.335 is a density of the completely amorphous polyethylene terephthalate resin, and 1.455 is a density of the theoretically completely crystallized polyethylene terephthalate resin.

[Measuring the haze]

Test pieces of a width of 30 mm and a length of 40 mm were cut out from the centers of body portions of the multilayer bottle just after molded and of the multilayer bottle after preserved in an environment of 50°C 80%RH for 72 hours. The test pieces in their multilayer form were measured for their hazes (%) by using a color computer [S & M COLOUR COMPUTER MODEL SM-4: manufactured by Suga Shikenki Co.].

[Example 1]

By using a coinjection molding machine equipped with three injection machines, i.e., an injection machine (a) for inner and outer PET layers, an injection machine (b) for an intermediate PET layer and an injection machine (c) for a clay-containing polyamide resin composition, a two-kind-five-layer (a/c/b/c/a) multilayer preform having inner, outer and intermediate layers of PET and layers of a clay-containing polyamide resin composition among them weighing 33 g was obtained by a successive injection molding method by feeding a polyethylene terephthalate (PET) resin dried at 150°C for 4 hours [BK6180, manufactured by Nihon Unipet Co.] to the injection machines (a) and (b), and by feeding a clay-containing polyamide resin composition obtained by melt-kneading a polymetaxylyleneadipamide resin (MXD6) [T620, manufactured by Nihon Unipet Co.] and 3% by weight of a swell-treated natural montmorillonite by using a biaxial extruder to the injection machine (c).
By using a quartz heater, the preform was preheated from the exterior thereof up to a surface temperature of 119°C, and was biaxially stretch-blow-molded at stretching ratios of 3.0 times longitudinally and 3.0 times transversely to obtain a multilayer bottle having a volume of 516 ml, and thicknesses of the layers in the body portion, i.e., inner PET layer (110 $\mu$m)/inner clay-containing polyamide resin composition layer (18 $\mu$m)/intermediate PET layer (80 $\mu$m)/outer clay-containing polyamide resin composition layer (17$\mu$m) /outer PET layer (140 $\mu$m).
The obtained bottle was measured for the exothermic peak starting temperature and the exothermic peak of the inner clay-containing polyamide resin composition layer, crystallinities of the inner PET layer and the outer PET layer, and its hazes.

[Example 2]

A multilayer bottle was molded in the same manner as in Example 1 but preheating the multilayer preform at 111°C so that the layers in the body portion thereof possessed thicknesses of inner PET layer (100 $\mu$m)/inner clay-containing polyamide resin composition layer (9 $\mu$m)/intermediate PET layer (110 $\mu$m)/outer clay-containing polyamide resin composition layer (11 $\mu$m)/outer PET layer (130 $\mu$m), and was measured for its crystallization peaks, crystallinities and hazes.

[Example 3]

A multilayer bottle was molded in the same manner as in Example 1 but preheating the multilayer preform at 113°C so that the layers in the body portion thereof possessed thicknesses of inner PET layer (110 $\mu$m)/inner clay-containing polyamide resin composition layer (17 $\mu$m)/intermediate PET layer (80 $\mu$m)/outer clay-containing polyamide resin composition layer (15 $\mu$m)/outer PET layer (140 $\mu$m), and was measured for its crystallization peaks, crystallinities and hazes.

[Example 4]

A multilayer bottle was molded in the same manner as in Example 1 but preheating the multilayer preform at 116°C so that the layers in the body portion thereof possessed thicknesses of inner PET layer (100 $\mu$m)/inner clay-containing polyamide resin composition layer (10 $\mu$m)/intermediate PET layer (110 $\mu$m)/outer clay-containing polyamide resin composition layer (10 $\mu$m)/outer PET layer (130 $\mu$m), and was measured for its crystallization peaks, crystallinities and hazes.

[Example 5]

A multilayer bottle was molded in the same manner as in Example 1 but preheating the multilayer preform at 117°C so that the layers in the body portion thereof possessed thicknesses of inner PET layer (100 $\mu$m)/inner clay-containing polyamide resin composition layer (7 $\mu$m)/intermediate PET layer (110 $\mu$m)/outer clay-containing polyamide resin composition layer (6 $\mu$m)/outer PET layer (130 $\mu$m), and was measured for its crystallization peaks, crystallinities and hazes.

[Comparative Example 1]

A multilayer bottle was molded in the same manner as in Example 1 but preheating the multilayer preform at 109°C so that the layers in the body portion thereof possessed thicknesses of inner PET layer (100 $\mu$m)/inner clay-containing polyamide resin composition layer (15 $\mu$m)/intermediate PET layer (100 $\mu$m)/outer clay-containing polyamide resin composition layer (14 $\mu$m)/outer PET layer (130 $\mu$m), and was measured for its crystallization peaks, crystallinities and hazes.

[Comparative Example 2]

A multilayer bottle was molded in the same manner as in Example 1 but having thicknesses of the layers in the body portion thereof of inner PET layer (100 $\mu$m)/inner clay-containing polyamide resin composition layer (22$\mu$ m)/ intermediate PET layer (80 $\mu$m)/outer clay-containing polyamide resin composition layer (24 $\mu$m)/outer PET layer (100 $\mu$m), and was measured for its crystallization peaks, crystallinities and hazes.

[Comparative Example 3]

A multilayer bottle was molded in the same manner as in Example 1 but preheating the multilayer preform at 106°C so that the layers in the body portion thereof possessed thicknesses of inner PET layer (100 $\mu$m)/inner clay-containing polyamide resin composition layer (10 $\mu$m)/intermediate PET layer (110 $\mu$m)/outer clay-containing polyamide resin composition layer (8 $\mu$m)/outer PET layer (130 $\mu$m), and was measured for its crystallization peaks, crystallinities and hazes.

[Comparative Example 4]

It was attempted to mold a multilayer bottle in the same manner as in Example 1 but preheating the multilayer preform at 123°C. However, the multilayer bottle could not be molded due to crystallization of the preform.

[Comparative Example 5]

By using a coinjection molding machine equipped with two injection machines, i.e., an injection machine (a) for inner and outer PET layers and an injection machine (b) for a clay-containing polyamide resin composition, a two-kind-three-layer (a/b/a) multilayer preform having inner and outer layers of PET and an intermediate layer of a clay-containing polyamide resin composition between them weighing 28 g was obtained by a successive injection molding method by feeding a polyethylene terephthalate (PET) resin dried at 150°C for 4 hours [BK6180, manufactured by Nihon Unipet Co.] to the injection machine (a), and by feeding a clay-containing polyamide resin composition obtained by melt-kneading a polymetaxylyleneadipamide resin (MXD6)[T620, manufactured by Nihon Unipet Co.] and 3% by weight of a swell-treated natural montmorillonite by using a biaxial extruder to the injection machine (b).
By using a quartz heater, the preform was preheated from the exterior thereof up to a surface temperature of 105°C, and was biaxially stretch-blow-molded at stretching ratios of 2.0 times longitudinally and 3.1 times transversely to obtain a multilayer bottle having a volume of 523 ml, and thicknesses of the layers in the body portion, i.e., inner PET layer (200 $\mu$m)/inner clay-containing polyamide resin composition layer (25 $\mu$m)/outer PET layer (180 $\mu$m).

The obtained bottle was measured for the exothermic peak starting temperature and the exothermic peak of the clay-containing polyamide resin composition layer, crystallinities and hazes of the inner PET layer and the outer PET layer.

[Comparative Example 6]

A multilayer bottle was molded in the same manner as in Example 3 but without blending the polymetaxylyleneadipamide resin (MXD6)[T620, manufactured by Nihon Unipet Co.] with the clay, and so molding the preform as to possess thicknesses of inner PET layer (100 µm) /inner MXD layer (12 µm)/intermediate PET layer (100 µm)/outer MXD6 layer (12µm)/outer PET layer (120 µm), and was measured for its crystallization peaks, crystallinities and hazes.

Table 1

| | Functional resin | Exothermic peak start temp. (°C) | Exothermic peak (J/g) | Thicknesses of inner/outer functional resin layers (µm) | Crystallinity of inner polyester layer (%) | Crystallinity of outer polyester layer (%) | Average crystallinity (%) |
|---|---|---|---|---|---|---|---|
| Ex. 1 | MXD6 + clay | 100.2 | 6.5 | 18/17 | 29.5 | 19.2 | 24.4 |
| Ex. 2 | MXD6 + clay | 96.5 | 8.1 | 9/11 | 23.5 | 24.7 | 24.1 |
| Ex. 3 | MXD6 + clay | 97.3 | 8.8 | 17/15 | 25.2 | 24.8 | 25.0 |
| Ex. 4 | MXD6 + clay | 97.8 | 7.2 | 10/10 | 27.8 | 25.0 | 26.4 |
| Ex. 5 | MXD6 + clay | 98.2 | 6.7 | 7/6 | 28.3 | 22.4 | 25.4 |
| Comp. Ex. 1 | MXD6 + clay | 93.0 | 10.8 | 15/14 | 24.2 | 25.6 | 24.9 |
| Comp. Ex. 2 | MXD6 + clay | 94.5 | 8.9 | 22/24 | 27.3 | 23.5 | 24.2 |
| Comp. Ex. 3 | MXD6 + clay | 95.6 | 9.6 | 10/8 | 23.5 | 23.2 | 23.0 |
| Comp. Ex. 4 | MXD6 + clay | – | – | 18/17 | – | – | – |
| Comp. Ex. 5 | MXD6 + clay | 85.0 | 12.9 | 25 (1 layer) | 18.5 | 12.3 | 15.4 |
| Comp. Ex. 6 | MXD6 | 96.2 | 8.7 | 12/12 | 25.0 | 23.3 | 24.2 |

Table 1 (continued)

| | Preform-preheating temperature (°C) | Initial haze (%) | Haze after preserved at 50°C 80%RH 72h (%) |
|---|---|---|---|
| Ex. 1 | 119 | 5.3 | 5.1 |
| Ex. 2 | 111 | 5.5 | 5.8 |
| Ex. 3 | 113 | 5.6 | 5.9 |
| Ex. 4 | 116 | 5.3 | 5.5 |
| Ex. 5 | 117 | 5.2 | 5.8 |
| Comp. Ex. 1 | 109 | 6.3 | 8.4 |
| Comp. Ex. 2 | 109 | 7.3 | 10.5 |
| Comp. Ex. 3 | 106 | 7.8 | 15.4 |
| Comp. Ex. 4 | 123 | *1 | *1 |
| Comp. Ex. 5 | 105 | 7.6 | 8.8 |
| Comp. Ex. 6 | 113 | 2.1 | 7.3 |

*1: could not be molded due to crystallization of the preform

## Claims

1. A multilayer polyester container comprising inner and outer layers of a polyester resin and at least one intermediate layer of a polyamide resin, wherein in the container body portion, the intermediate layer of said polyamide resin has an exothermic peak starting temperature due to crystallization of not lower than 96°C as measured by a differential scanning calorimetry, and a clay is dispersed in said polyamide resin.

2. The multilayer polyester container according to claim 1, wherein the intermediate layer of said polyamide resin has an exothermic peak due to crystallization of not higher than 9 J/g.

3. The multilayer polyester container according to claim 1, wherein said polyamide resin is a polymetaxyleneadipamide.

4. The multilayer polyester container according to claim 1, wherein the intermediate layer of said polyamide resin has a thickness of less than 20 μm.

**5.** The multilayer polyester container according to claim 1, wherein the inner layer of said polyester resin has a crystallinity of not less than 23%, the outer layer thereof has a crystallinity of not less than 18%, and an average value of the crystallinity of the inner layer and the crystallinity of the outer layer is not less than 24%.

**6.** A process for producing a multilayer polyester container by biaxially stretch-blow-molding a multilayer preform which comprises inner and outer layers of a polyester resin and at least one intermediate layer of a polyamide resin in which a clay is dispersed, wherein the multilayer preform is biaxially stretch-blow-molded being heated at a temperature of 110 to 120°C so as to mold a multilayer polyester container in which the intermediate layer of the polyamide resin has an exothermic peak starting temperature due to crystallization of not lower than 96°C as measured by a differential scanning calorimetry.

Fig. 1

1  3  2

Fig. 2

3a  3b

1  4  2

<div align="center">

**INTERNATIONAL SEARCH REPORT**

</div>

| | International application No. |
|---|---|
| | PCT/JP2008/056592 |

A. CLASSIFICATION OF SUBJECT MATTER
*B65D65/40*(2006.01)i, *B29C49/08*(2006.01)i, *B29C49/22*(2006.01)i, *B32B27/34* (2006.01)i, *B32B27/36*(2006.01)i, *B65D1/00*(2006.01)i, *C08L77/00*(2006.01)i, *B29K67/00*(2006.01)n, *B29K77/00*(2006.01)n, *B29L9/00*(2006.01)n,
According to International Patent Classification (IPC) or to both national classification and IPC

B. FIELDS SEARCHED

Minimum documentation searched (classification system followed by classification symbols)
B65D65/40, B29C49/08, B29C49/22, B32B27/34, B32B27/36, B65D1/00,
C08L77/00, B29K67/00, B29K77/00, B29L9/00, B29L22/00

Documentation searched other than minimum documentation to the extent that such documents are included in the fields searched
Jitsuyo Shinan Koho          1922-1996    Jitsuyo Shinan Toroku Koho    1996-2008
Kokai Jitsuyo Shinan Koho    1971-2008    Toroku Jitsuyo Shinan Koho    1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-12023 A  (Toyo Seikan Kaisha, Ltd.),<br>15 January, 2003 (15.01.03),<br>Claims; Par. Nos. [0013], [0029], [0050],<br>[0059], [0063]<br>(Family: none) | 1-6 |
| Y | JP 2004-142444 A  (Mitsubishi Gas Chemical Co., Inc.),<br>20 May, 2004 (20.05.04),<br>Claims<br>& US 2004/0068037 A1    & EP 1405874 A1<br>& CN 1496810 A | 1-6 |
| Y | JP 2002-201293 A  (Toyo Seikan Kaisha, Ltd.),<br>19 July, 2002 (19.07.02),<br>Claims; Par. No. [0012]<br>(Family: none) | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    22 April, 2008 (22.04.08) | Date of mailing of the international search report<br>    13 May, 2008 (13.05.08) |
|---|---|
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/056592

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2006-27701 A  (Toyo Seikan Kaisha, Ltd.), 02 February, 2006 (02.02.06), Claims; Par. Nos. [0025] to [0027], [0032] to [0035], [0043] (Family: none) | 5 |
| A | WO 2005/118289 A1  (Mitsubishi Gas Chemical Co., Inc.), 15 December, 2005 (15.12.05), Par. Nos. [0033], [0058] & EP 1752286 A1 | 1-6 |

Form PCT/ISA/210 (continuation of second sheet) (April 2007)

**INTERNATIONAL SEARCH REPORT**

International application No.

PCT/JP2008/056592

Continuation of A. CLASSIFICATION OF SUBJECT MATTER
  (International Patent Classification (IPC))

_B29L22/00_(2006.01)n

            (According to International Patent Classification (IPC) or to both national
            classification and IPC)

Form PCT/ISA/210 (extra sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005067637 A
- JP 2004142444 A
- JP 2917851 B